# EUROPEAN PATENT APPLICATION

(11) **EP 2 922 011 A1**
(43) Date of publication of application: **23.09.2015**
(21) Application number: 15159414.0
(22) Date of filing: 17.03.2015
(51) Int. Cl.: G06Q 30/06

(54) **ORDERING SYSTEM AND METHOD FOR A WEBSTORE**

(30) Priority: 17.03.2014 FI 20145247
(71) Applicant: LVI-WaBek Oy, 02920 Espoo (FI)
(72) Inventor: Pelkonen, Mari-Jaana, 02920 Espoo (FI)
(74) Representative: Seppo Laine Oy

(57) **Abstract**

Ordering system for a webstore (7), which ordering system comprises a first remotely readable identifier (1), which comprises a first code, which is arranged to direct a mobile station's (6) web-browser program to connect to the webstore (7) for placing a first order, for example, through a first webpage (10). The ordering system also comprises at least one second remotely readable identifier (2, 3, 4), which correspondingly comprises at least one second code, which differs from the first code and is arranged to direct the browser program to connect to the webstore (7) for placing at least one second order differing from the first order. If the second order relates to a second product, the code can direct the browser program to a corresponding second webpage (11a... 11c).

## Description

The invention relates to an ordering system and ordering method for placing orders to be made through a webstore. The term webstore refers to a trading service, which is provided for the use of customers through a data network, such as the internet.

### Background art

Various arrangements are previously known for receiving orders in webstores.

One known solution is to use product lists, which contain product codes, which can, in turn, be read using a barcode reader in the webstore's system, and thus facilitate placing an order.

Another known solution is to enter the product code manually into a high-speed-search or ordering field arranged for the purpose.

The use of such solutions requires a terminal device manufactured for the purpose, so that orders can be placed smoothly. However, it would often be advantageous if the order could also be placed using the customer's own mobile station. This is indeed possible through an internet browser, but using a small mobile device the placing of orders is nevertheless generally difficult and slow. In principle, the use of an application reading barcodes facilitates the placing of an order, but the placing of the order is complicated then too, because the user must manually open the browser, search for the address of the webstore, log in to the webstore, perform the operations required to enter or download the product code, and enter the number of items being ordered.

If the product code is entered manually, errors can easily occur, particularly using a mobile device and if the order should be placed quickly. The user must manually open the browser, search for the address of the webstore, log in to the webstore, and manually enter the product code and number of items.

A third known solution is to connect a warehouse-management program to communicate with the webstore.

A fourth known solution is a smart-shelf system, which is connected to communicate with the webstore.

These solutions demand largish investments and thus cannot be used on a wide scale.

In addition, webstore methods can also be used in physical stores, from which the customer themselves collects the products before paying. An order is then formed at the checkout, and is processed and billed through the webstore. The problems described above also relate to such a solution. In addition, the seller's employees' time can be taken up with writing orders, which leads to costs and is away from customer service.

Thus, there is still room for improvement in the technologies used to place and receive orders in webstores.

### Disclosure of Invention

An object of the invention is to create a technical solution, by means of which the placing of orders through a webstore will be facilitated. It would be good for embodiments toprovide practical solutions for placing orders also by means of a mobile station.

The invention is based on manufacturing remotely-readable identifiers, which comprise a code, which is arranged to direct the browser program to connect to the webstore for placing an order. The code is arranged to direct the browser program directly to the ordering page or the like of the product or product group to be ordered, from where the order can be easily placed. In addition, in embodiments the code can already contain data on the order to be placed. Such data can be, for example, one, two, or three of the following: product code, number of items to be ordered, and individuation information on the person placing the order, for example, a login code. Such an identifier can be implemented using, for example, the NFC or QR-technique, or some similar technique.

More specifically, the ordering system according to the invention is characterized by what is stated in the characterizing portion of Claim 1.

The identifier according to the invention is, for its parts, characterized by what is stated in the characterizing portion of Claim 10, and the webstore system by what is stated in the characterizing portion of Claim 12. One method according to the invention is, in turn, defined in Claim 13.

Considerable advantages are gained with the aid of the invention. This is because, with the aid of the invention, the placing of orders in a webstore can be facilitated and, in addition, the invention has embodiments, which also permit easy and rapid ordering even by means of a mobile station.

### Brief Description of Drawings

In the following, the invention is examined with the aid of examples and with references to the accompanying drawings.
Figure 1 shows one webstore system according to the invention and a customer's mobile station; and
Figure 2 shows the steps of one method according to the invention.

### Modes for Carrying Out the Invention

The term a remotely readable identifier refers to an identifier, the code contained in which can be read without making contact. The reading distance can be, for example, 0 - 50 cm. Because it is often advantageous in the embodiments to locate the identifiers close to each other, a remote-reading technology with a shorter reading distance is generally used. The reading distance can be, for example, 0 - 20 cm, less than 10 cm, or less than 5 cm. One remote-reading technology that is well suited to the purpose is so-called NFC (Near Field Communication) technology. NFC technology is well suited to data transfer at short distances. NFC technology is a standardized technology and widely available. A mobile station equipped with NFC properties and an internet connection is a particularly applicable terminal device for reading identifiers in terms of many of the embodiments. Another technology well suited to the purpose is QR code. QR code is a two-dimensional image code, which can be read by utilizing the camera of a mobile station.

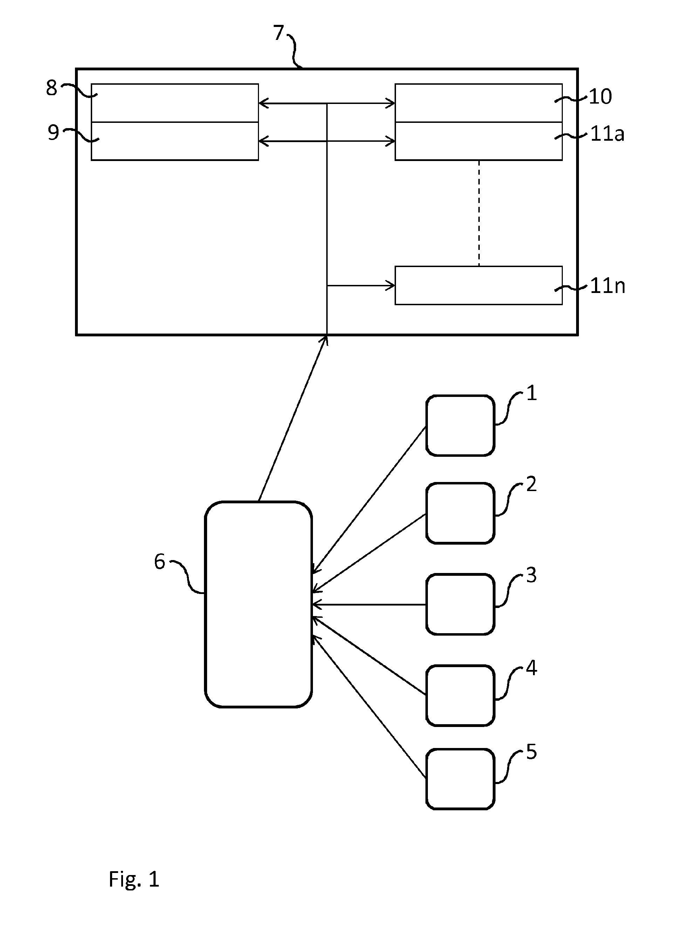

In one embodiment shown in Figure 1, an ordering system is implemented for a webstore 7 in such a way that the ordering system comprising a first remotely-readable identifier 1 and at least one second remotely-readable identifier 2, 3, 4. The first remotely-readable identifier 1 comprises a first code, which is arranged to direct the browser program to connect to the webstore 7 for the placing of a first order. Correspondingly, the second remotely-readable identifier 2, 3, 4 comprises a corresponding second code, which differs from the first code and is arranged to direct the browser program to connect to with the webstore 7 for placing at least one second order differing from the first order. In this way, an ordering system can be implemented, in which by reading the first code a move is automatically made to the website of the webstore, in such a way that the first order is already preliminarily prepared. Correspondingly, by reading the second code a move is automatically made to the website of the webstore, in such a way that the second order is already preliminarily prepared.

A desired number of various such prepared orders can be programmed into the ordering system and a code corresponding to each prepared order is recorded against the identifier 1, 2, 3, 4. For their part, the identifiers can be located in suitable places, in which a customer typically places a preliminarily prepared type order. Readable data on the type of preliminarily prepared order corresponding to the identifier can also be located in connection with the identifiers. The embodiment of Figure 1 differs essentially from such known solutions, in which a remotely-readable identifier directs the application only to the webstore's home page 8.

Preliminary preparation can, for example, concern the fact that the product being ordered in the preliminarily prepared order is selected automatically on the basis of the code contained in the identifier, in which case the user of the webstore need not separately select the product or enter a product code.

Preliminary preparation can also, for example, concern the fact that in a preliminarily prepared order the number of items to be ordered is also selected automatically on the basis of the code contained in the identifier, so that that user of the webstore need not separately select the product or also the number of items to be ordered, if the preselected number items meets the customers wishes.

Preliminary preparation can also concern the fact that in a preliminarily prepared order the orderer's individuation data, billing data, and/or the delivery address for the order are selected automatically on the basis of the code contained in the identifier. According to the embodiment of Figure 1, there is a product-specific ordering page 10, 11a...11n in the webstore 7 for ordering each different product and each product-specific ordering page has its own network address. In such an embodiment, a first code can be arranged to direct the browser program of the ordering page 10 of a first product, utilizing the network address of the ordering page. Correspondingly, each second code can be arranged to direct the browser program to the ordering page 11a...11n of a second product differing from the first product, utilizing the network address of the ordering page of the second product.

In an alternative embodiment, the ordering pages 10, 11a...11n of the webstore 7 are product-group-specific. In this case, to order a product, the browser program is initially directed to the product-group-specific webpage containing this product. In this embodiment, each product-group-specific ordering page has its own network address. It is also possible for some of the ordering pages 10, 11a...11n of the webstore 7 to be product-group-specific ordering pages and some product-specific ordering pages.

In one embodiment, the first code is arranged to direct the browser program to the ordering page 10 of a first product, utilizing the network address of the ordering page, and to pre-complete a first order amount on the ordering page. Further, at least one second code can be arranged to direct the browser program to the ordering page 10 of a first product, utilizing the network address of the ordering page, and to pre-complete on the ordering page a second order amount differing from the first order amount.

According to one embodiment, the remotely readable identifier 1, 2, 3, 4, 5 is an NFC identifier or a QR code. Later in this document the remotely readable identifier 1, 2, 3, 4, 5 is also referred to as a tag. Such an identifier can be situated on, for example, a sticker, which is glued in a suitable place for placing orders. If wished, one such sticker can also be equipped with more than one identifier.

In one embodiment, the ordering system comprises at least a third remotely readable identifier 5, which comprises a third code, which is arranged to direct the browser program to the webstore's login page 9. Such a third code can, for its part, contain a login identifier, in such a way that the code is arranged to add the login identifier to the login page 9, in order to accelerate logging in to the webstore 7.

In one embodiment, the aforementioned first code contains a login identifier in addition to other data.

The code contained in the identifier can thus contain one or more portions, which have different purposes. One portion of the code can, for example, contain the network address of the ordering page, i.e. a URL. The second portion of the code can, for example, contain a default ordering amount. One of the code's portions can also contain the login data.

According to the embodiment of Figure 1, the ordering system comprises an application to be performed in a mobile station 6, which is arranged to direct the mobile station 6 to read the said remotely readable identifiers 1, 2, 3, 4, 5 and in response to the reading event to direct the browser of the mobile station to go to the web pages 9, 10, 11a...11n shown by the read identifier.

In the embodiment of Figure 1, the remotely readable identifier 1, 2, 3, 4, 5 comprises a code, which is arranged to direct the browser program to a specific page 9, 10, 11a...11n of the webstore, utilizing the network address, and to pre-complete at least one datum on the webpage. According to various embodiments, such a pre-completed at least one datum can comprise, for example, a product code, a login identifier, and/or an ordering amount.

According to one embodiment, the method for receiving an order in a webstore comprises the following steps:
the customer is provided with at least two remotely readable identifiers, each of which comprises a code, which is arranged to direct the browser program to one specific product-specific ordering page, utilizing the network address of the ordering page;
a connection request formed on the basis of the reading of the first remotely readable identifier is received from the terminal device used by the customer;
on the basis of the connection request, a product-specific ordering page relating to a first product is displayed on the terminal device of the customer, through which one or more first products can be added to the customer's order;
a second connection request formed on the basis of the reading of a second remotely readable identifier is received from the terminal device used by the customer; and
a product-specific ordering page relating to a second product is displayed on the customer's terminal device on the basis of the second connection request, through which one or more second products can be added to the customer's order.

According to a second embodiment, in such a method:
for logging in to the webstore, the customer is provided with at least one remotely readable identifier, which contains a code, which is arranged to direct the browser program to the webstore's login page and to pre-enter at least one login identifier on the login page;
a connection request formed on the basis of the reading of the said remotely readable identifier is received from the terminal device used by the customer; and
the login page, on which is pre-entered the said at least one login identifier, is displayed on the customer's terminal device on the basis of the connection request.

According to an embodiment, the connection request formed on the basis of the reading of the first remotely readable identifier includes is directed to a first network address and the second connection request formed on the basis of the reading of the second remotely readable identifier is directed to a second network address different from the first network address in the same webstore.

According to another embodiment, the connection request formed on the basis of the reading of the first remotely readable identifier includes information on the basis of which the connection request is directable to a first network address, and the second connection request formed on the basis of the reading of the second remotely readable identifier includes information on the basis of which it is directable to a second network address different from the first network address in the same webstore.

The embodiments provide an opportunity to reach, by reading a remotely read tag, directly desired information in an environment protected by a passwork, in a webstore or similar service.

The desired information is in this case, for example, a product-specific order status and the possibility to order more.

The embodiments permit, for example, the user to login to the webstore by reading two remotely readable tags, and to be able to see the order status of a product (whether the product is already ordered, when the product will be delivered) and to enter a new order relating to the product. The default order amount can also be ready, so that the customer only approves the product and amount to be added to the cart. The order can be directly confirmed, or the confirmation may still require a manual event or the reading of a confirmation tag.

Thus, in one embodiment the remotely readable identifier comprises a fifth code, which directs the webstore to confirm the order in the cart.

In one embodiment, login to the webstore takes place by reading a remotely readable identifier which leads to the webstore's login page, in such a way that the username is already entered. If the customer wants to record the password in the browser, login only requires the LOGIN button to be pressed, or some other corresponding operation to be performed. This step can be omitted, if the customer has already logged in to the webstore.

Correspondingly, ordering from the webstore takes place by reading an identifier, which leads to the location of the desired product on the results page of the webstore's product search. Instead of this, it can lead directly to the page, on which a specific product and amount are confirmed for ordering.

In one embodiment, ordering by mobile means through the webstore from a supplier's shelf in the customer's premises allows the supplier to monitor in real time the balance consumption from the storage location in the customer's premises and to bill according to consumption. Through the webstore, the customer also has a real-time view of the balance consumption.

The embodiments can be implemented on the basis of existing technology, so that the introduction of the ordering technology is relatively cheap and the tags, terminal devices, and applications required by the embodiments of the system are commercially available. With the aid of the embodiments, enterprises can exploit existing webstores more comprehensively. The embodiments particularly help to resolve the problem of monitoring the balances of a supplier's warehouse in the customer's premises.

Many existing webstores can be relatively easily programmed to operate in the manner required by the embodiments.

In general, with the aid of the embodiments logistics can be facilitated on work sites, in fitters' vans, etc., without requiring the customer to purchase programs or expensive devices.

Because orders placed using mobile means are on the customer's webstore account, the customer can manage mobile orders comprehensively.

In the following, some embodiments are described, in which NFC identifiers or QR codes are used as identifiers, i.e. as tags.

Embodiment 1:
1) The code of the first identifier to be read contains a URL, which is in the form www.verkkokauppa.fi/loginname_XXX. This leads to logging in with the correct login name and a function is automatically selected in the webstore, by means of which the customer can log in.
2) The code of the second identifier to be read contains a URL, which is in the form www.verkkokauppa.fi/tuotehaku/tuotexxxx. This opens a window on the screen, in which there is the selected product and the customer can either enter the order amount they desire or accept the default order amount by pressing the ORDER button. Here, the customer can be shown the order status of the product. Thus the customer sees at once whether the product in question is already coming to the emptying shelf/warehouse unit, or whether they must place an order. The order can go directly to processing without a cart procedure, or to the cart, irrespective of the webstore implementation.

In this embodiment, the customer can read the amount they desire from the identifiers of different products, which are then added to the order. Finally the customer confirms the order, either by reading the confirmation identifier or by confirming in the web service, e.g., by pressing OK. The customer can, of course, add products to the order through a manual search.

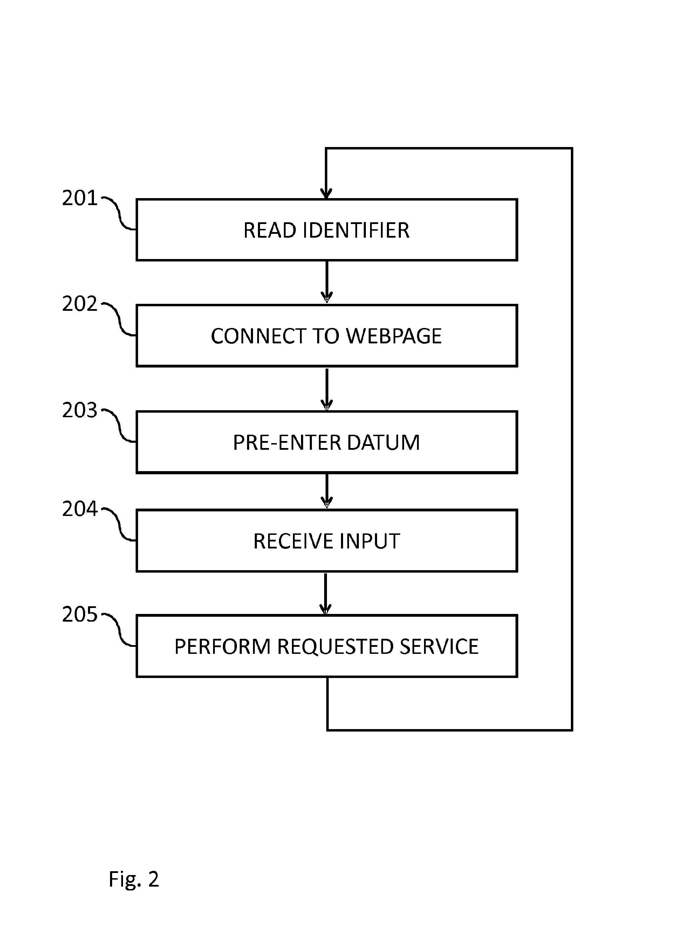

Figure 2 shows the method according to one embodiment. According to Figure 2, in step 201 an identifier is read with the aid of a mobile station. In response to the reading, the software application to be performed in the mobile station directs the mobile station's web browser to a URL read from the identifier, i.e. in step 202 a connection is made to a defined webpage. At the same time, at least one datum is pre-entered on the webpage in step 203. This datum to be pre-entered is also obtained or derived from a code contained in the identifier. After this, input is received from the customer through the mobile station's user interface in step 204 and, in response to the input, the service requested with the aid of the input is performed in the webstore in step 205.

In one embodiment, the method of Figure 2 is repeated by reading different indentifiers during the performance of one order. In one such embodiment, during the first performance the login identifier is read in step 201 and a move is made to the login page in step 202. In step 203, the customer's login identifier is pre-entered on the login page and in step 204 at least one input is received. In one embodiment, the input includes the entering of a password and the pressing of the login button. In a simpler embodiment, only the login button is pressed. In an alternative embodiment, logging in is automatic, so that this step is not performed. Next, the requested service is performed in step 205, i.e. logging in to the webstore takes place.

Next the customer reads their desired number of identifiers. On each reading, the code contained in the identifier is read in step 201 and a move is made to the product-specific webpage corresponding to the product in step 202. At the same time, in step 203, at least one datum, for example, the default-order amount of the product is pre-entered on the basis of the information contained in the code. After this, in step 204, input is received, which can be, for example, the confirmation of the pre-entered order amount or alteration of the pre-entered order amount and confirmation after this. In response to the input, the confirmed order is added to the customer's cart in the webstore, i.e. step 205 is performed. This method is repeated for as long as the customer wishes to add products to their order.

After this, the customer can confirm their entire order in the cart, when the order will move forward to order processing. This confirmation too can be performed by reading an identifier made for this purpose. This can be implemented, for example, by performing the method shown in Figure 2.

The method of Figure 2 can be performed, for example, in the webstore system depicted in Figure 1.

With the aid of the embodiments, a quick and easy way can be provided to order from a webstore using a mobile device, especially when the question is of repeatedly ordering the same products, and when agreement has been made beforehand between the customer and the supplier concerning, for instance, the manner of delivery and billing. Known webstores are generally built to be easily operated using a computer, but browsing and searching long product lists using a mobile phone is still laborious and unpleasant. Ordering one product and checking the status of the order demands many separate moves inside the webstore, which can be slow in a mobile network. With the aid of the embodiments, this problem can be significantly eased.

With the aid of the embodiments, it is possible, for example, to implement very practically the refill ordering of the same, specific products, for example, the placing of refill orders for temporary worksite stores, the refilling of the contents of an installation pack, or the refill ordering of products for the shelves of a store.

With the aid of the embodiments, it is also possible to accelerate cash-and-carry sales. One way to do this is a smart catalogue, from which the customer can enter their own order by reading the identifiers contained in the smart catalogue. The warehouse then collects the order and brings it to the waiting customer. The embodiments can also be used in self-service collection warehouse stores. In the case of self-service collection, the salesperson's tasks remains only to deliver and bill for a webstore order that has been placed. A third example is a supplier's shelf in the customer's premises, the storage-location balance consumption of which the supplier monitors in real time through the webstore. In this example, the customer makes an easy webstore order with the aid of the embodiments by collecting products from the supplier's shelf. Collection made with the aid of a mobile device does not require any investment by the customer in warehouse-management software, nor a separate manually made notification of goods used/resold from the shelf. Because the balance-consumption information travels through the webstore, the customer can monitor their own consumption in real time.

On the basis of the examples presented above, it is obvious that within the framework of the invention numerous solutions differing from the embodiments described above can be implemented. Thus, the invention is not intended to be restricted to concern only the examples presented above, but the patent protection should be examined to the full scope of the accompanying Claims.

## Claims

1. Ordering system for a webstore (7), the webstore (7) comprising:
a first ordering page (10) for ordering a first product or product group, the first ordering page (10) having a first network address; and
at least one second ordering page (11a...11n) for ordering at least one second product or product group differing from the first product or product group, each second ordering page having its own individual second network address;
**characterized in that** the system comprises:
a first remotely readable identifier (1), which comprises a first code, the first code arranged to direct the browser program to make contact with the first ordering page (10) by utilizing the first network address; and
at least one second remotely readable identifier (2, 3, 4), which comprises a second code differing from the first code, the second code arranged to direct the browser program to make contact with the corresponding second ordering page (11a...11n) by utilizing the corresponding second network address.

2. Ordering system according to Claim 1, **characterized in that** at least one second code comprises a portion, in which an order amount is coded, and the ordering system is arranged to pre-complete the said coded order amount on the ordering page.

3. Ordering system according to Claim 2, **characterized in that** the system comprises at least two separate second remotely readable identifiers (2, 3, 4) for ordering the same second product, in such a way that ordering amounts of different sizes for pre-completing the ordering page are coded in the codes of the identifiers.

4. Ordering system according to any of Claims 1 - 3, **characterized in that** the remotely readable identifier (1, 2, 3, 4, 5) is an NFC identifier or a QR code.

5. Ordering system according to any of Claims 1 - 4, **characterized in that** it comprises at least one third remotely readable identifier (5), which comprises a third code, which is arranged to direct the browser program to the webstore's login page (9).

6. Ordering system according to Claim 5, **characterized in that** the third code contains a login identifier, in such a way that the code is arranged to add the login identifier to the login page (9) in order to accelerate logging in to the webstore (7).

7. Ordering system according to any of Claims 1 - 4, **characterized in that** the first code contains a login identifier.

8. Ordering system according to any of Claims 1 - 7, **characterized in that** it comprises an application to be run in a mobile station (6), which is arranged to direct the mobile station (6) to read the said remotely readable identifiers (1, 2, 3, 4, 5) and, in response to the reading event, to direct the mobile station's web browser to go to the web page (8, 9, 10, 11a...11n) indicated by the read identifier.

9. Ordering system according to any of Claims 1 - 8, **characterized in that** at least one of the remotely readable identifiers (1, 2, 3, 4) comprises a code arranged to direct the web browser to the login page (9) of the webstore (7) and to pre-enter at least one login identifier on the login page (9).

10. Remotely readable identifier (1, 2, 3, 4, 5) for an ordering system according to any of Claims 1 - 9, **characterized in that** the identifier comprises a code, which is arranged, by utilizing a network address, to direct a browser program to a specific page (9, 10, 11a...11n) of a webstore and to pre-enter at least one datum on the webpage.

11. Ordering system according to Claim 10, **characterized in that** the pre-entered at least one datum comprises a login identifier.

12. Ordering system according to Claim 10 or 11, **characterized in that** the pre-entered at least one datum comprises an ordering amount.

13. Webstore system, **characterized in that** it comprises an ordering system according to any of Claims 1 - 9.

14. Method for receiving an order in a webstore, **characterized in that**, the method comprises:
providing a customer with at least two remotely readable identifiers, each identifier comprising a code arranged to direct a browser program to one specific ordering page by utilizing the network address of the ordering page;
receiving, from a terminal device used by the customer, a connection request formed on the basis of reading of a first remotely readable identifier;
on the basis of the connection request, displaying for the customer's terminal device an ordering page relating to a first product or product group, through which ordering page one or more first products can be added to the customer's order;
receiving, from the terminal device used by the customer, a second connection request formed on the basis of reading of a second remotely readable identifier; and
on the basis of the second connection request, displaying for the customer's terminal device an ordering page relating to a second product or product group, through which ordering page one or more second products can be added to the customer's order.

15. Method according to Claim 14, **characterized by**:
providing the customer with at least one remotely readable identifier for logging in to the webstore, the at least one remotely readable identifier containing a code, which is arranged to direct the browser program to a login page of the webstore and to pre-enter at least one login identifier on the login page;
receiving, from the terminal device used by the customer, a connection request formed on the basis of the reading of the said remotely readable identifier; and
on the basis of the connection request, displaying the login page for the customer's terminal device, the said at least one login identifier pre-entered on the login page.
